Europäisches Patentamt

European Patent Office

Office européen des brevets

(19)

(11) **EP 0 562 129 B1**

(12) **EUROPEAN PATENT SPECIFICATION**

(45) Date of publication and mention
of the grant of the patent:
**03.09.1997 Bulletin 1997/36**

(51) Int Cl.[6]: **G01S 13/90**

(21) Application number: **92103655.4**

(22) Date of filing: **03.03.1992**

(54) **Method and means for extracting motion errors of a platform carrying a coherent imaging radar system**

Verfahren und Vorrichtung zur Extraktion von Bewegungsfehlern einer ein kohärentes Abbildungsradarsystem tragenden Plattform

Procédé et dispositif pour l'extraction des erreurs de mouvement d'une plateforme transportant un système de radar cohérent d'imagerie

(84) Designated Contracting States:
**DE GB IT**

(43) Date of publication of application:
**29.09.1993 Bulletin 1993/39**

(73) Proprietors:
- **Deutsche Forschungsanstalt für Luft- und Raumfahrt e.V.
51126 Köln (DE)**
- **CONSIGLIO NAZIONALE DELLE RICERCHE
00185 Roma (IT)**

(72) Inventors:
- **Moreira, Joao
W-8910 Landsberg (DE)**
- **Lanari, Riccardo
I-80128 Napoli (IT)**

(74) Representative:
**von Kirschbaum, Albrecht, Dipl.-Ing.
Patentanwalt,
Postfach 15 20
82102 Germering (DE)**

(56) References cited:
**EP-A- 0 406 877          EP-A- 0 406 879**

- **IEE PROCEEDINGS F 138 no. 3, June 1991, STEVENAGE , HERTS. , GB pages 192 - 198 , XP231091 G. FRANCESHETTI ET AL. 'Processing of signum coded SAR signal : theory and experiments.'**
- **IEEE TRANSACTIONS ON GEOSCIENCE AND REMOTE CONTROL vol. 28, no. 4, July 1990, NEW YORK , NY , USA pages 620 - 626 , XP148282 J. R. MOREIRA 'A new method of aircraft motion error extraction from radar raw data for real time motion compensation'**
- **IEEE IGARSS 89 , 12TH CANADIAN SYMPOSIUM ON REMOTE SENSING vol. 4, July 1989, VANCOUVER pages 2217 - 2220 , XP139369 J. R. MOREIRA 'A new method of aircraft motion error extraction from radar raw data for real time motion compensation'**
- **IEEE INTERNATIONAL RADAR CONFERENCE May 1990, ARLINGTON , VA , USA pages 70 - 75 , XP131162 J. R. MOREIRA 'Estimating the residual error of the reflectivity displacement method for aircraft motion error extraction from SAR raw data'**

**Description**

1. Background of the Invention

The invention relates to a method for extracting motion errors of a platform carrying a coherent imaging radar system from a signum-coded radar raw data according to the preamble of claim 1 and to means carrying out the method in accordance with claim 1.

2. Description of the Prior Art

Coherent imaging radar systems are installed on a platform, such as an aircraft, missile or helicopter or the like.

Because of the conditions prevailing in connection with such platforms and because of the effects of their surroundings, such as turbulence, a pltform normally cannot maintain a preset flight path. The platform deviation from the desired set flight path is called motion error. Motion errors of a magnitude of the wave length of the radar transmission signal cause distortions in coherent imaging radar systems, because of which the quality of an image is greatly reduced. The quality of an image is judged by its resolution, the contrast and the geometric distortions.

To attain high resolution, high contrast and low geometric distortions in an image, the raw data received must be corrected prior to processing or generation of the image. Such corrections can be performed in real time or off-line and they are often called motion compensations. A correlation between the raw data and the expected theoretical phase history is performed for generating an image, and a high resolution two-dimensional image can only be obtained after such a correlation.

All motion compensation systems depend on onboard navigation systems or extract the motion errors from the radar raw data.

The motion compensation systems which depend on onboard navigation systems have several disadvantages. Because of the high demands made on the motion data in respect to accuracy, bandwidth and temporal stability, it is necessary to use inertial navigation systems which, for example have been specially manufactured, in connection with imaging radar systems where motion compensation is performed. However, it results in very high costs for design, installation and maintenance. When it is used a motion compensation system operating with Global Positioning System (GPS) receivers, a support by a ground station is absolutely necessary. Because of this not only there are very high operating costs, but considerable restrictions in the choice of the field of operations must be also expected. However without the support of a ground station, the GPS motion data required for motion compensation are not sufficiently exact.

The motion compensation systems which extract the motion errors from the radar raw data uses either auto focus methods or the so-called reflectivity displacement method (RDM).

The auto focus methods cannot be performed in real time because of the great computing demands. Furthermore, autofocus methods do not have a great bandwith, nor do they have high accuracy, so that motion errors caused in particular by wind gusts cannot be corrected. For this reason, autofocus methods are normally only used to estimate the mean forward velocity of a platform.

The reflectivity displacement method, which is patented by DE 39 22 428 C2, has a much higher bandwidth and accuracy than the autofocus methods. It is furthermore possible to determine in addition many motion errors, such as acceleration, velocity and displacement in Line Of Sight (LOS) direction of the antenna. All these data cannot be obtained by means of the autofocus method. The execution of the method RDM is also possible in real time, which also cannot be realized with the autofocus method.

The characteristic of the RDM is the need of the radar raw data represented digitally with more than 1 bit. For the most of the coherent imaging radars, the raw data is represented digitally in real or complex form. This representation have a width of normally 6 bits, which quantizes the amplitude of the raw data into 64 steps.

On the other hand, there is an increasing interest in processing signum-coded raw data. The benefits of the signum coded raw data reside in a simpler processing algorithm and a smaller transmission bandwidth. Processing of signum coded SAR signal is disclosed in IEE Proceedings F, Vol. 138. No 3. June 1991, pages 192-195.

For coherent imaging radars which represent only the sign of the raw data, i.e. positive or negative (1 bit representation or so-called signum-coded), only inaccurate results can be obtained with the RDM.

3. Summary of the Invention

It is therefore the object of the invention to provide a method for extracting motion errors of a platform carrying a coherent imaging radar system from the signum-coded raw data as well as means for executing this method without having to resort to a navigation system or to the radar raw data with more than 1 bit representation.

According to the invention which is defined in claim 1 a method for extracting motion errors of a platform carrying a coherent imaging radar system from a signum-coded raw data, imaging terrains with varied ground reflectivity, comprises the steps of range compressing the signum-coded raw data using a correlation, which uses a signum-coded reference function; forming azimuth power spectra continuously successive in time over a set period of time; filtering the azimuth power spectra with a low-pass filter for reducing the noise caused by the signum-coding of the raw data; obtaining the frequency shift of the ground reflectivity part by determining the position of the maximum of the correlation of two filtered azimuth spectra formed immediately following each other in time; performing a separation of a velocity (V(t)) in the forward direction from an acceleration ($a_{LOS}$(t)) in the LOS-direction of the antenna; subjecting the obtained acceleration ($a_{LOS}$(t)) in the line of sight direction of the antenna to a two-fold integration, and obtaining after a following normalization the displacement in the line of sight direction of the antenna. Means carrying out the method is claimed in claim 2.

The invention is an improvement of the reflectivity displacement method, so-called RDM, before, patented by DE 39 22 428 C2. The invention makes possible the extraction of the motion errors of the platform from the signum-coded raw data, from which the RDM can only work giving inaccurate results.

The following movements of the platform are determined: its forward velocity, as well as the displacement in LOS-direction of the antenna.

In accordance with the invention, separation and evaluation of two parts of the azimuth power spectrum of the signum-coded raw data will be performed for extracting motion errors, namely either the separation and evaluation of what will be called hereinafter an antenna pattern part or of what will be called hereinafter a ground reflectivity part. In what follows, only the evaluation of the ground reflectivity part will be described and treated, this method will therefore be called the signum-coded reflectivity displacement method (SC-RDM) for simplicity's sake.

In contrast to the GPS systems previously mentioned, it is particularly advantageous in the motion extraction method according to the invention that all information required for motion compensation is taken from the signum-coded raw radar data. In contrast to the GPS systems, there is no need for a ground station, so that the method of the invention can be used much more flexibly and is more self-sufficient.

In comparison with the autofocus mehtod, the motion extraction method of the invention has a much higher bandwidth and accuracy.

In comparison with the RDM, the motion extraction method according to the invention needs a smaller raw data rate. Instead needing a raw data representation width of, for example, 6 bits for the motion error extraction, the SC-RDM needs only 1 bit. This corresponds to a data rate reduction of six (6).

Moreover the SC-RDM represents an essential support for the correct processing of the signum-coded raw data.

In the accompanying drawings:

Fig.1a to 1c      are schematic views of diagrams which, in their totality, form an azimuth power spectrum, where

Fig.1a      is a schematic view of the azimuth power spectrum of a range gate,

Fig.1b      is a schematic course of the antenna pattern part of the azimuth power spectrum,

Fig.1c      is a schematic course of the ground reflectivity part of the azimuth power spectrum;

Fig.2      is the azimuth power spectrum of a range gate in the form of a diagram obtained from signum-coded raw data as well as its low-pass filtered form in the method of the invention;

Fig.3      is a schematic course of an azimuth power spectrum at two different points in time (t = i - 1 and t = i) as well as their correlation according to DE 39 22 428 C2, and

Fig.4      is a block diagram of means for carrying out the method.

### 4. Description of the preferred embodiment

In the method concerning the invention for the extraction of the motion errors, the azimuth power spectrum of the signum-coded raw data is principally evaluated and in particular the part due to the ground reflectivity; this method is called the signum-coded reflectivity displacement method (SC-RDM), as already mentioned.

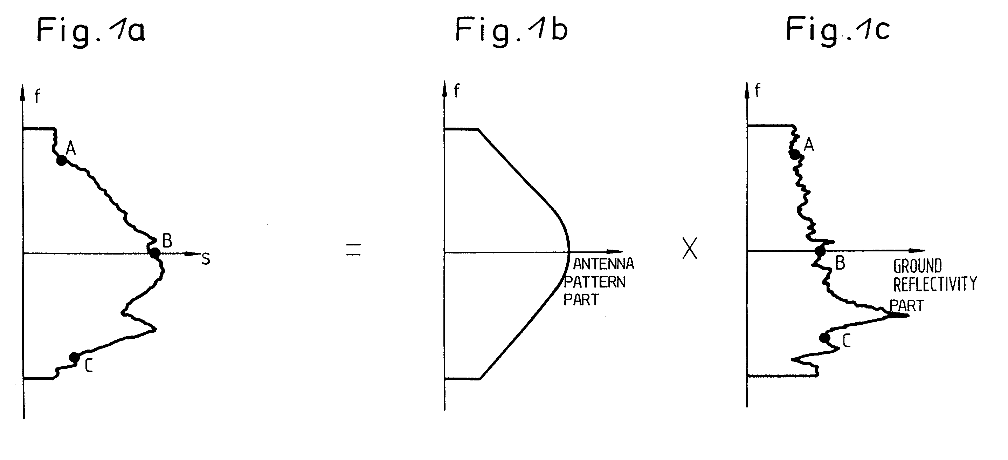

From Figs.1a to 1c the composition of an azimuth power spectrum is given in the schematic course of graphs, the frequency f being centered in the individual drawings on the vertical axis and the power S on the horizontal axis. As can be seen from Figs.1b and 1c in particular, the azimuth power spectrum of a range gate shown schematically in Fig.1a is essentially composed of the product of the antenna pattern part in the azimuth (flight) direction shown in Fig. 1b and the ground reflectivity part given by the respective target points A, B and C, for example, and shown in Fig.1c. By ground reflectivity is meant the ratio of the power of a received and transmitted signal.

The accuracy of the method depends in this case on the course of the ground reflectivity or on the contrast $\tau$ of the azimuth power spectrum. The contrast $\tau$ of an azimuth power spectrum is defined as the ratio between the standard deviation of the azimuth power spectrum and the mean value of the azimuth power spectrum.

In accordance with the present invention, the so-called signum-coded reflectivity displacement method (SC-RDM) is used in terrains which do not have a homogeneous ground reflectivity and thus high contrast, such as dry land with cities, meadows, mountanis etc..

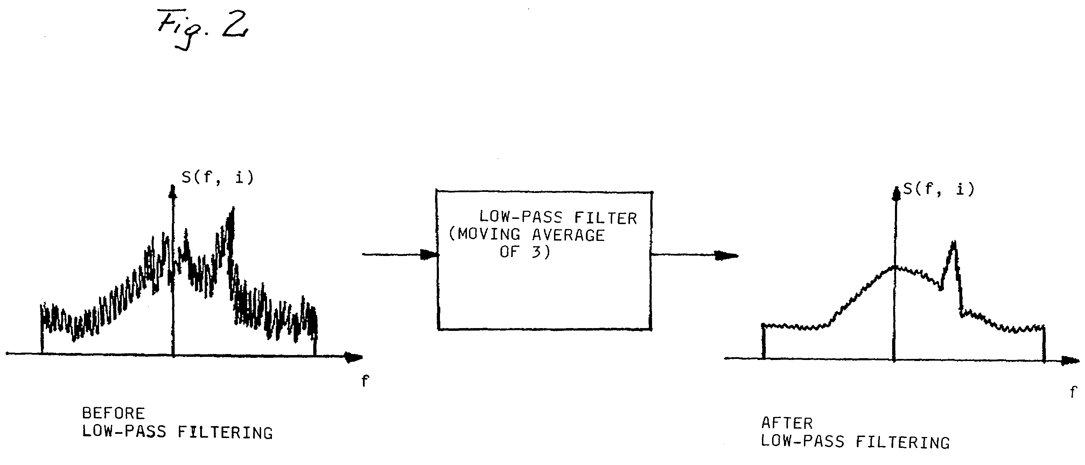

Because the raw data are signum-coded, the azimuth power spectrum presents an additional noise, which not appears evaluating the raw data with a number of bits higher than 1. This noise can be reduced by filtering the azimuth power spectrum with a low-pass filter, according to Fig.2. A low-pass filter example is the moving average with a cutoff frequency of about three (3) frequency channels of the azimuth power spectrum.

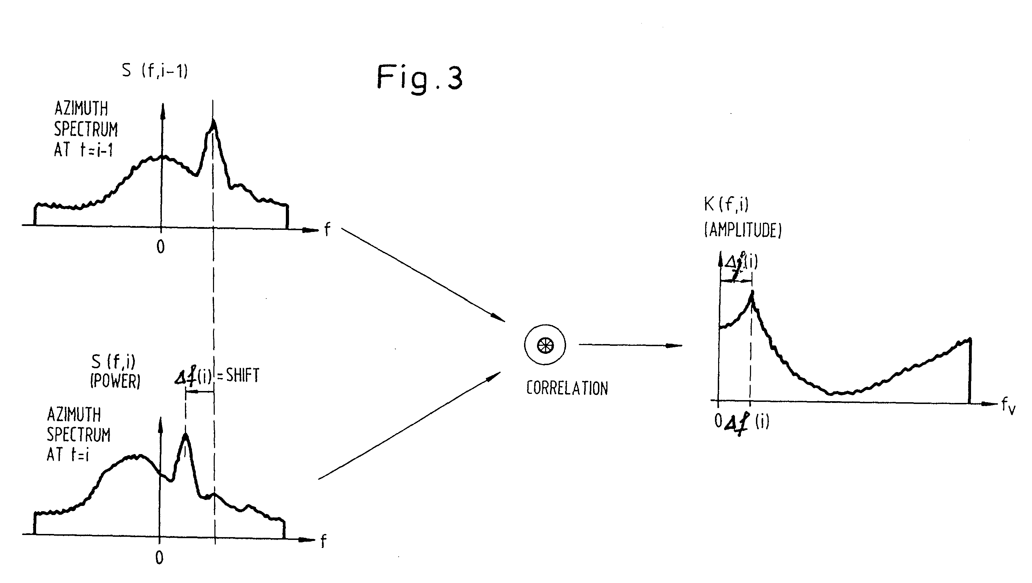

In the signum-coded reflectivity displacement method in accordance with the invention, the shift between two azimuth power spectra of the same range gate following each other in time is evaluated. Two such azimuth power spectra are illustrated in Fig .3, in the top part for the time t = i - 1 and in the bottom part for the time t = i, where i is an integer. In the two azimuth power spectra, the power S as a function of the frequency f on the horizontal axis is placed on the vertical ax is. Furthermore a shift $\Delta$ f(i) of a maximum in relation to the azimuth power spectrum in the top part of Fig.3 is drawn in the bottom diagram.

In this case the course of a ground reflectivity always shows a negative frequency shift, because a platform carrrying the radar system always flies in the forward-direction and therefore all scatter sources, i.e. all objects illuminated by the radar and scattering back, have a negative course of the doppler shift.

Thus, two successively taken spectra are very similar, and the frequency shift $\Delta$ f between the ground reflectivity parts of both spectra according to DE 39 22 428 C2 becomes to:

$$\Delta f = \frac{2 \cdot V^2(t) \cdot \Delta t}{\lambda R} + \frac{2 \cdot \alpha_{LOS}(t) \cdot \Delta t}{\lambda} \tag{1}$$

where V(t) is the forward velocity, $a_{LOS}(t)$ is the acceleration in LOS-direction, $\lambda$ is the wave-length, R is the range of the range gate from the antenna disposed on the platform and $\Delta$ t is the time difference between the spectra taken successively in time. As illustrated in the lower part of Fig.3, the shift can be determined by the position of the maximum with the aid of a correlation of the two spectra, as schematically indicated in the right part of Fig.3, and where, related to the example shown, the course of the graphs shown in the right part of the Fig.3 results. In this case the amplitude as a function of the shift f and the value i entered on the horizontal axis is shown on the vertical axis.

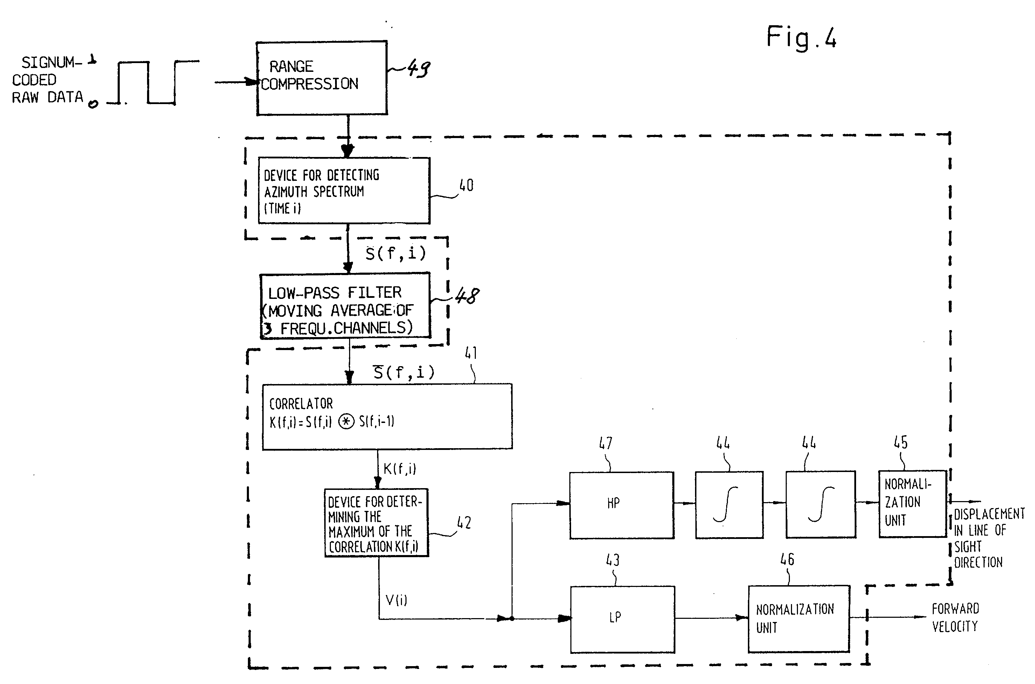

A block diagram of means for carrying out the method for extracting motion errors of a platform carrying an imaging radar system from the signum-coded raw data, which takes into account the ground reflectivity part of the low-pass filterd azimuth power spectrum is shown in detail in Fig.4. A part of Fig.4 enclosed with dashed lines corresponds to the diagram in Fig.4 of the German patent DE 39 22 428 C2. To represent a terrain with varied ground reflectivity this terrain is illuminated by means of the main lobe of an antenna disposed on the platform. By means of this, the signum-coded and range uncompressed raw data is range compressed with means 49, which correlates the signum-coded raw data with a reference function in the range (cross-flight) direction. The reference function used for the correlation can also be signum-coded. This is a very important point for what concerns the presented algorithm. In fact the correlation between the signum-coded raw data and the signum-coded reference function can be realized, in time domain, in a very fast way and strongly reducing the memory occupancy. Infact it is only necessary to store the sign of the raw data and of the reference function. For the most of the coherent imaging radars the raw data have a 6 bits representation, so that one can reduce 6 times the memory occupation. A computational advantage is also obtained. The processing (conventional or not) of radar data is a convolution of two sequences as shown in the following formula:

$$r(m) = \sum_{l=0}^{L-1} h(l) \cdot g(m-l) \quad \text{for} \quad m = 0, \dots, M-1. \tag{2}$$

r() is the processed data, h() the raw data and g() the reference function. All the signals are supposed to be sampled at the correct sampling frequency. The evaluation of r(m) implies L.M complex multiplications and summations. Reminding that the sequences h() and g() are one bit coded, multiplications and summations can be substituted by logic operations performed by simple 1-bit logic means. A rule table is used to perform the multiplication of the four possible pairs of elements assuming values +1 and -1. The sum is implemented by a binary counter, which must be incremented by a multiplication result of +1 and decremented by a multiplicaton result of -1. This procedure can be carried out much faster than the conventional one. In comparison with the RDM that needs conventional range processed data the computational gain due to the SC-RDM is evident.

The azimuth power spectra are continuously detected over a set period of time with means 40 for detecting azimuth power spectra in a timed sequence, i.e. at different points in time i (i being an integer), where this time period for taking these data is much shorter than the time required by platform to fly over the terrain to be represented. The azimuth power spectra are then low-pass filtered with means 48, for attenuating the noise caused by the signum-coding of the raw data. The means 48 can be a moving average filter with a cutoff frequency of three (3) frequency channels of the azimuth power spectrum. Two such filtered azimuth power spectra are schematically shown as examples for the time periods t = i - 1 and t = i in the left portion of Fig.3. The filtered azimuth power spectra S(f,i), taken in a timed sequence as a function of the radar azimuth frequency f, are passed to means 41, for formating the correlation between two azimuth power spectra taken immediately following each other in time, namely K(f,i) = S(f,i)*S(f,i-1) . In the means 42 downstream for determining the maximum of a correlation K(f,i), the frequency shift $\Delta$ f(i) of the ground reflectivity part is determined by means of the position of a maximum, which can be seen schematically in the right part of Fig.3 and which corresponds to the equation (1) shown above. The separation of the forward velocity V(t) contained in the first term of equation (1), from the acceleration $a_{LOS}$ in the line of sight directioin of the antenna contained in the second term of equation (1), is performed by means of a high-pass filter 47 and a low-pass filter 43 respectively. This is possible because the forward velocity V(t) has a very low bandwidth at wind gusts up to 1 m/s, which extends from 0 to 0.1 Hz, for example. In contrast thereto, the acceleration $a_{LOS}$(t) in LOS-direction of the antenna has a considerably greater bandwidth and furthermore, only the upper frequency range is important for motion compensaton and only frequencies starting at 0.1 Hz need to be considered, for example.

So that is possible to determine the displacement in the LOS-direction of the antenna, the data passed by the high-pass filter 47 are subjected twice to an integration in integrating units 44 and subsequently nomalized in a normalization unit 45, while the signal passed by the low-pass filter 43 for determining the forward velocity only need to be normalized in a normalization unit 46. At the output of the normalization unit 45 the displacement, i.e. the motion error in LOS-direction of the antenna, is obtained as motion data, while at the output of the normalization unit 46, the forward velocity is obtained as motion data.

## Claims

1. Method for extracting motion errors of a platform carrying a coherent imaging radar system from a signum-coded raw data, imaging terrains with varied ground reflectivity, comprising the steps of:

   a) range compressing the signum-coded raw data using a correlation, which uses a signum-coded reference function;

   b) forming azimuth power spectra continuously successive in time over a set period of time;

   c) obtaining the frequency shift of the ground reflectivity part by determining the position of the maximum of the correlation of two filtered azimuth spectra formed immediately following each other in time;

   d) performing a separation of a velocity (V(t)) in the forward direction from an acceleration ($a_{LOS}$(t)) in the LOS-direction of the antenna;

   e) subjecting the obtained acceleration ($a_{LOS}$(t)) in the line of sight direction of the antenna to a two-fold integration, and

   f) obtaining after a following normalization the displacement in the line of sight direction of the antenna.

   characterized after the step b) by
   g) filtering the azimuth power spectra with a low-pass filter for reducing the noise caused by the signum-coding of the raw data.

2. Means carrying out the method in accordance with claim 1, comprising

   (1-bit) compression means (49) for the correlation of the signum-coded raw data with a signum-coded reference function;

   azimuth power spectrum detection means (40) for the formation of azimuth power spectra continuously following each other in time;

means (41) for forming the correlation between two filtered azimuth spectra formed immediately following each other in time;

means (42) for determining the maximum of the correlation, by a high-pass filter (47) for determining the displacement in line of sight direction of the antenna, downstream of which two integrating units (44) and a normalization unit (45) are provided, and by a low-pass filter (43) and a further normalization unit (46) for the determination of the forward velocity placed downstream of said low-pass filter,

characterized by
a low-pass filter (48) for reducing the noise caused due to the signum-coded representation of the raw data and the reference function of the range compression.

## Patentansprüche

1. Verfahren zur Extraktion von Bewegungsfehlern einer ein kohärentes Abbildungsradarsystem tragenden Plattform aus signum-codierten Rohdaten zum Abbilden von Gebieten mit unterschiedlichen Rückstreuverhältnissen, bei welchem

   a) die signum-codierten Rohdaten mit Hilfe einer Korrelation, welche eine signum-codierte Referenzfunktion benutzt, entfernungskomprimiert werden;
   b) Azimut-Leistungsspektren über einem bestimmten zeitraum fortlaufend, zeitlich aufeinanderfolgend erzeugt werden;
   c) die Frequenzverschiebung des Rückstreuverhältnisanteils erhalten wird, indem die Position des Maximums der Korrelation von zwei zeitlich unmittelbar aufeinanderfolgenden, gefilterten Azimutspektren erhalten wird;
   d) eine Trennung einer Geschwindigkeit (V(t)) in der Vorwärtsrichtung von einer Beschleunigung ($a_{LOS}$(t)) in der Blickrichtung (LOS) der Antenne durchgeführt wird;
   e) die erhaltene Beschleunigung ($a_{LOS}$(t) in der Blickrichtung der Antenne (LOS) einer zweifachen Integration unterzogen wird;
   f) nach einer anschließenden Normierung die Ablage in der Blickrichtung der Antenne erhalten wird, dadurch **gekennzeichnet**, daß nach dem Schritt b)
   g) die Azimutleistungsspektren mit einem Tiefpaßfilter gefiltert werden, um das durch die Signum-Codierung der Rohdaten hervorgerufene Rauschen zu reduzieren.

2. Einrichtung zur Durchführung des Verfahrens nach Anspruch 1, mit

   einer (1-Bit) Kompressionseinrichtung (49) für die Korrelation der signum-codierten Rohdaten mit einer signum-codierten Referenzfunktion;
   einer Azimutleistungsspektrum-Erfassungseinrichtung (40) für die Erzeugung von fortlaufend zeitlich aufeinanderfolgenden Azimutleistungsspektren,
   einer Einrichtung (41) zum Erzeugen der Korrelation zwischen den zwei gefilterten, zeitlich unmittelbar aufeinanderfolgend erzeugten Azimutspektren;
   einer Einrichtung (42) zum Bestimmen des Maximums der Korrelation,
   einem Hochpaßfilter (47), welchem zum Bestimmen der Ablage in der Antennenblickrichtung zwei Integriereinheiten (44) und eine Normiereinheit (45) nachgeordnet sind, und
   einem Tiefpaßfilter (43) und einer weiteren dem Tiefpaßfilter nachgeordneten Normiereinheit (46) zum Bestimmen der Vorwärtsgeschwindigkeit, **gekennzeichnet** durch ein Tiefpaßfilter (48) zum Verringern des Rauschens, das infolge der signum-codierten Darstellung der Rohdaten und der Referenzfunktion der Entfernungskompression hervorgerufen worden ist.

## Revendications

1. Procédé pour l'extraction des erreurs de mouvement d'une plate-forme transportant un système de radar cohérent d'imagerie à partir de données brutes codées avec une fonction signe, pour imager des terrains ayant une réflectivité au sol variée, comprenant les étapes :

a) compression de distance des données brutes codées par une fonction signe en utilisant une corrélation qui utilise une fonction de référence codée avec une fonction signe ;

b) former les spectres de puissance azimutaux continuellement en succession dans le temps pendant une période de temps fixée ; caractérisé par le fait

c) d'obtenir un décalage de fréquence de la réflectivité au sol en partie par détermination de la position du maximum de la corrélation de deux spectres azimutaux filtrés formés immédiatement l'un après l'autre dans le temps ;

d) d'effectuer une séparation de la vitesse (V(t)) dans la direction avant à partir de l'accélération ($a_{LOS}$(t)) dans la direction LOS de l'antenne ;

e) de soumettre l'accélération obtenue ($a_{LOS}$(t)) dans la ligne de la direction de visée de l'antenne à une double intégration, et

f) d'obtenir après une normalisation consécutive, le déplacement dans la ligne de la direction de visée de l'antenne ;

g) de filtrer les spectres de puissance azimutaux avec un filtre basse-bas pour réduire le bruit provoqué par le codage avec la fonction signe des données brutes.

2. Moyen pour effectuer le procédé selon la revendication 1, comprenant

des moyens de compression (1-bit) (49) pour la corrélation des données brutes codées avec la fonction signe avec une fonction de référence codée signe ;

des moyens de détection de spectre de puissance azimutal (40) pour la formation de spectres de puissance azimutaux en continu l'un après l'autre dans le temps ;

des moyens (41) pour former la corrélation entre deux spectres azimutaux filtrés formés immédiatement l'un après l'autre dans le temps ;

des moyens (42) pour déterminer le maximum de corrélations par un filtre passe-haut (47) pour déterminer le déplacement dans la ligne de direction de visée de l'antenne, en aval de laquelle sont prévues deux unités d'intégration (44) et une unité de normalisation (45) et par un filtre passe-bas (43) et une autre unité de normalisation (46) pour déterminer la vitesse avant en aval du filtre passe-bas, caractérisé par

un filtre passe-bas (48) pour réduire le bruit dû à la représentation codée avec une fonction signe des données brutes et la fonction de référence de la compression de distance.

Fig.1a

Fig.1b

Fig.1c

8

EP 0 562 129 B1

## Fig. 2

S(f, i)

LOW-PASS FILTER
(MOVING AVERAGE
OF 3)

S(f, i)

f

f

BEFORE
LOW-PASS FILTERING

AFTER
LOW-PASS FILTERING

Fig. 3

S (f,i-1)

AZIMUTH
SPECTRUM
AT t=i-1

S (f,i)
(POWER)

$\Delta f(i)$ = SHIFT

AZIMUTH
SPECTRUM
AT t=i

CORRELATION

K (f,i)
(AMPLITUDE)

$\Delta f(i)$

$0 \; \Delta f(i)$

$f_v$

EP 0 562 129 B1

EP 0 562 129 B1

Fig.4

SIGNUM-
CODED
RAW DATA

```
┌─────────────┐
│ RANGE       │ ~49
│ COMPRESSION │
└─────────────┘
```

```
┌──────────────────┐
│ DEVICE FOR DETECTING │
│ AZIMUTH SPECTRUM │ 40
│ (TIME i)         │
└──────────────────┘
```

$\overline{S}(f,i)$

```
┌──────────────────────┐
│ LOW-PASS FILTER       │
│ (MOVING AVERAGE OF    │ 48
│ 3 FREQU.CHANNELS)     │
└──────────────────────┘
```

$\overline{\overline{S}}(f,i)$

```
┌──────────────────────────────┐
│ CORRELATOR                    │   41
│ K(f,i)=S(f,i) ⊛ S(f,i-1)      │
└──────────────────────────────┘
```

$K(f,i)$

```
┌──────────────────┐
│ DEVICE FOR DETER- │
│ MINING THE        │
│ MAXIMUM OF THE    │ 42
│ CORRELATION K(f,i)│
└──────────────────┘
```

V(i)

```
┌──────┐     ┌──────┐     ┌──────┐     ┌──────────┐
│  HP  │     │  ∫   │     │  ∫   │     │ NORMALI- │
│      │     │      │     │      │     │ ZATION   │
│  47  │     │  44  │     │  44  │     │ UNIT  45 │
└──────┘     └──────┘     └──────┘     └──────────┘
```

DISPLACEMENT
IN LINE OF
SIGHT
DIRECTION

```
┌──────┐          ┌──────────────┐
│  LP  │          │ NORMALIZATION │
│  43  │          │ UNIT   46    │
└──────┘          └──────────────┘
```

FORWARD
VELOCITY